Europäisches Patentamt

European Patent Office

Office européen des brevets

(19)

(11) Veröffentlichungsnummer: **0 104 703**
**B1**

(12) # EUROPÄISCHE PATENTSCHRIFT

(45) Veröffentlichungstag der Patentschrift:
**28.01.87**

(51) Int. Cl.⁴: **H 01 G 9/02**

(21) Anmeldenummer: **83201340.3**

(22) Anmeldetag: **19.09.83**

(54) **Elektrolytischer Kondensator.**

(30) Priorität: **24.09.82 NL 8203708**

(43) Veröffentlichungstag der Anmeldung:
**04.04.84 Patentblatt 84/14**

(45) Bekanntmachung des Hinweises auf die Patenterteilung:
**28.01.87 Patentblatt 87/5**

(84) Benannte Vertragsstaaten:
**DE FR GB IT NL SE**

(56) Entgegenhaltungen:
**GB - A - 1 147 058**
**NL - A - 7 007 481**
**US - A - 3 539 614**
**US - A - 3 702 426**

(73) Patentinhaber: **N.V. Philips' Gloeilampenfabrieken,
Groenewoudseweg 1, NL-5621 BA Eindhoven (NL)**

(72) Erfinder: **Van Heusden, Tineke, p/a INT.
OCTROOIBUREAU B.V. Prof. Holstlaan 6, NL-5656 AA
Eindhoven (NL)**

(74) Vertreter: **Auwerda, Cornelis Petrus et al,
INTERNATIONAAL OCTROOIBUREAU B.V. Prof.
Holstlaan 6, NL-5656 AA Eindhoven (NL)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen elektrolytischen Kondensator mit einem im wesentlichen nichtwässrigen Elektrolyten mit einer hohen spezifischen Leitfähigkeit.

Aus der britischen Patentschrift 992 463 ist ein elektrolytischer Kondensator bekannt, der eine durch anodische Oxidation mit einer dielektrischen Oxidschicht versehene Anode, eine Kathode, einen Seperator sowie eine Elektrolytflüssigkeit enthält, die aus einem Salz einer substituierten Ammoniumbase und einer in einem dipolaren organischen Lösungsmittel gelösten organischen Säure besteht.

Diese Art von Elektrolytflüssigkeiten bewirkt, dass der Kondensator sich zum Gebrauch in einem breiten Temperaturbereich und zwar von −55°C bis +125°C eignet. Der Verlauf der Kapazität und des Reihenwiderstandes bleibt bis an die beiden Extremwerte innerhalb brauchbarer Grenzen. Ein Nachteil der bekannten Flüssigkeit ist, dass das «Formierungsverhalten», d.h. der Wirkungsgrad, mit dem der Formierstrom die dielektrische Oxidschicht aufbaut, und die Kompaktheit der Oxidschicht nicht optimal sind. Dies führt dazu, dass eine übermässige Gasentwicklung stattfindet und dass der Leckstrom zu gross ist. Auch sind meistens die bekannten Flüssigkeiten nicht sowohl für Hochspannungs- als auch für Niederspannungsbetrieb geeignet, wobei zu berücksichtigen ist, dass der für den betreffenden Spannungsbereich erforderliche Wert der spezifischen Leitfähigkeit immer durch Wahl der Konzentration der gelösten ionogenen Stoffe eingestellt werden muss. Insbesondere für Niederspannungskondensatoren (bis 100 V Arbeitsspannung) mit hochkapazitiver Anoden- und Kathodenfolie muss die Elektrolytflüssigkeit eine hohe spezifische Leitfähigkeit von mindestens 5 mS/cm aufweisen, was mit den bekannten Flüssigkeiten nicht zu erreichen ist. Für Hochspannungskondensatoren kann die Flüssigkeit eine niedrigere spezifische Leitfähigkeit aufweisen. Dies wird durch eine niedrigere Konzentration ionogener Stoffe in dem Lösungsmittel als bei der entsprechenden Niederspannungsflüssigkeit erreicht.

Die Erfindung schafft nun eine derartige Elektrolytflüssigkeit.

Ein elektrolytischer Kondensator mit einer durch anodische Oxidation mit einer dielektrischen Oxidschicht versehenen Anode, einer Kathode, einem Separator und einer Elektrolytflüssigkeit aus einem Salz einer zweiwertigen organischen Karbonsäure und einer stickstoffhaltigen organischen Base gelöst in einer wasserhältigen dipolaren organischen Lösungsmittel, ist nach der Erfindung dadurch gekennzeichnet, dass in der Elektrolytflüssigkeit, die mindestens 2, jedoch höchstens 10 Gew.% Wasser enthält, ein Salz einer quaternären Ammoniumbase und einer zweiwertigen organischen Karbonsäure der allgemeinen Formel HOOC-$(CH_2)_n$-COOH in der 4 $\leqslant n \leqslant 8$ ist, gelöst ist.

Zum Gebrauch im Hochspannungsbereich (100 V und höhere Arbeitsspannung) kann die Elektrolytflüssigkeit eine niedrigere spezifische Leitfähigkeit aufweisen. Es ist jedoch vorteilhaft, dass für die beiden Bereiche der Arbeitsspannung die gleiche Art von Elektrolytflüssigkeit benutzt werden kann mit dem einzigen Unterschied in der Konzentration des gelösten Salzes.

Es wird bemerkt dass aus der NL-A-7 007 481 Elektrolytflüssigkeiten für Elektrolytkondensatoren beansprucht werden, die einige Elemente der Flüssigkeiten im Rahmen der Erfindung enthalten: zweiwertige anorganische Karbonsäuren, eine stickstoffhaltige organische Base und Anwesenheit von Wasser

Die Formulierung dieser Flüssigkeiten ist jedoch sehr allgemein gefasst und es wird einen sehr ausgedehnte Liste von möglichen Elektrolytflüssigkeiten gegeben, ohne dass die elektrischen Ergebnisse eines hiermit ausgestatteten Kondensators gezeigt werden.

Die erfindungsgemässen Elektrolytflüssigkeiten unterscheiden sich von denen nach der NL-A-7 007 481 erstens dadurch, dass imperativ eine quaternäre Ammoniumbase erfordert wird und zweitens dadurch dass zweiwertige Basen der Formel HOOC-$(CH_2)_n$-COOH wesentlich sind, wobei 4 $\leqslant n \leqslant 8$ sein soll.

Es werden einige Beispiele von hochleitenden Flüssigkeiten in der NL-A gegeben, die jedoch alle Nitrate enthalten. Nitrate sind bekanntlich in Elektrolytkondensatoren mit Al Anoden völlig abwegig.

Nach einer bevorzugten Ausführungsform der Erfindung lässt sich ein besseres Formierungsverhalten in einem elektrolytischen Kondensator dadurch verwirklichen, dass das gelöste Salz in der Elektrolytflüssigkeit die Base und die Säure im stoechiometrischen Molverhältnis von 2:1 enthält.

Was das Lösungsmittel anbelangt, wird ein Carbonamid bevorzugt und zwar wegen der damit zu erhaltenden hohen spezifischen Leitfähigkeit. Abhängig von der Verwendung kann ein zweites Lösungsmittel hinzugefügt werden, wie ein anderes Amid, Äthylenglykol, γ-Butyrolacton oder N-Methylpyrrolidon.

Was die Durchschlagspannung des Kondensators anbelangt, ist eine Flüssigkeit optimal, die bis 4 Gew.% Wasser enthält.

Zur Erhöhung der Durchschlagspannung bis 500 V sind auch Borsäure und/oder ein substituiertes Phosphat als Zusatz zu der Elektrolytflüssigkeit nach der Erfindung günstig.

Ein in der Praxis durchaus brauchbares Lösungsmittel für die Elektrolytflüssigkeit ist ein Gemisch aus N, N-Dimethylacetamid und einem N-Monomethylacetamid in einem Molverhältnis von 4:1. In diesem Gemisch ist die Löslichkeit der meistens in Betracht kommenden Salze (beispielsweise das Tetraäthylammoniumsalz von Azelainsäure) äusserst gross und die Leitfähigkeit des Ganzen ist hoch, nicht nur wegen der Konzentration gelösten Salzes, sondern auch wegen der Wahl des Salzes und des Lösungsmittels. So tritt das obengenannte Salz in einer Konzentration von 17 Gew.% in diesem Lösungsmittel auf, das aus 83 Gew.% Dimethylacetamid und 17 Gew.% N-Methylacetamid mit etwa 2 Gew.% Wasser auf 7,6 mS/cm.

In der untenstehenden Tafel 1 sind einige Elektrolytflüssigkeiten mit ihrer spezifischen Leitfähigkeit aufgeführt, die zum Teil für Hochspannungskondensatoren, zum Teil für Niederspannungskondensatoren geeignet sind. Dabei werden folgende Abkürzungen gebraucht:

DMA = N, N-Dimethylacetamid
NMA = N-Methylacetamid
DMF = N, N-Dimethylformamid
TEA = Tetraäthylammonium.

### Tafel 1

| Lösungsmittel | H$_2$O-Gehalt Gew.% | Salz | Salzgehalt Gew.% | Leitfähigkeit (mS/cm) 25° |
|---|---|---|---|---|
| DMA | 4,5 | TEA-Malonat | 3,7 | 2,4 |
| DMA | 4,5 | TEA-Adipat | 3,8 | 2,8 |
| DMA | 2,0 | TEA-Adipat | 17,0 | 5,1 |
| DMA | 2,0 | TEA-Azelat | 17,0 | 4,5 |
| DMA 83 Gew.% } NMA 17 Gew.% | 2,0 | TEA-Azelat | 17,0 | 7,6 |
| DMF | 1,5 | TEA-Azelat | 23,0 | 9,4 |
| DMA 83 Gew.% } NMA 17 Gew.% | 1,5 | TEA-Azelat | 10,0 | 6,3 |
| DMA 83 Gew.% } NMA 17 Gew.% | 1,5 | TEA-Suberat | 10,0 | 5,3 |
| DMA 83 Gew.% } NMA 17 Gew.% | 1,5 | TEA-Sebazinat | 10,0 | 5,2 |
| DMA 83 Gew.% } NMA 17 Gew.% | 4,0 | TEA-Sebazinat | 1,8 | 1,22 |
| DMA 83 Gew.% } NMA 17 Gew.% | 4,0 | TEA-Sebazinat | 0,68 | 0,85 |
| DMA 83 Gew.% } NMA 17 Gew.% | 4,0 | TEA-Azelat | 1,8 | 1,67 |

Zur Erläuterung der Erfindung folgen nun einige Ausführungsbeispiele.

Die folgenden Elektrolytflüssigkeiten werden dabei benutzt:

### Tafel 2

| Elektrolyt | Lösungsmittel | Lösungsmittel Gehalt Gew.% | Salz | Salzgehalt Gew.% | Zusatz | Zusatz-Gehalt Gew.% | H$_2$O Gehalt Gew.% |
|---|---|---|---|---|---|---|---|
| 1 | DMA Glykol | 63,7 } 21,2 | Ammonium pentaborat | 10,1 | Borsäure | 5,0 | |
| 2 | DMA Glykol | 72,6 } 11,8 | Ammonium pentaborat | 4,1 | Pikrinsäure | 7,5 | 4,0 |
| 3 | DMA NMA | 76,3 } 16,0 | TEA-Azelat | 3,0 | Borsäure | 0,7 | 4,0 |
| 4 | DMA NMA | 76,2 } 16,0 | TEA-Azelat | 3,0 | Borsäure Butylphosphat | 0,7 0,1 | 4,0 |
| 5 | DMA NMA | 76,5 } 16,1 | TEA-Sebazinat | 2,7 | Borsäure Butylphosphat | 0,7 0,5 | 4,0 |
| 6 | DMA NMA | 77,6 } 16,5 | TEA-Sebazinat | 1,2 | Borsäure | 0,7 | 4,0 |
| 7 | DMA NMA | 77,2 } 16,4 | TEA-Sebazinat | 1,2 | Borsäure Butylphosphat | 0,7 0,5 | 4,0 |

Tabelle 2 (Fortsetzung)

| Elektrolyt | Lösungsmittel | Lösungs-mittel Gehalt Gew.% | Salz | Salzgehalt Gew.% | Zusatz | Zusatz-Gehalt Gew.% | $H_2O$ Gehalt Gew.% |
|---|---|---|---|---|---|---|---|
| 8 | DMA NMA | 77,7 16,4 } | TEA-Sebazinat | 0,68 | Borsäure Butylphosphat | 0,7 0,5 | 4,0 |
| 9 | DMA NMA | 66,0 13,8 } | TEA-Azelat | 17,0 | Borsäure Butylphosphat | 0,7 0,5 | 2,0 |
| 10 | DMA NMA | 70,1 14,7 } | TEA-Azelat | 10,0 | Borsäure Butylphosphat | 0,7 0,5 | 4,0 |

DMA = N,N-Dimethylacetamid
NMA = N-Methylacetamid
Glykol = Äthylenglykol
TEA = Tetraäthylammonium

Nr. 1 und 2 sind Beispiele herkömmlicher Erlektrolyte für Hochspannungs-Elektrolytkondensatoren mit einer Leitfähigkeit von 1,07 mS/cm bei 25°C und Niederspannungskondensatoren mit einer Leitfähigkeit von 4,0 mS/cm. Sie werden bei den untenstehenden Versuchen als Bezugswert benutzt.

In der Tafel 3 wird die Formierungsausbeute zweier Flüssigkeiten nach der Erfindung, berechnet aus dem Stromverlauf bei der Formierung mit konstanter Spannung, mit dem der zwei Bezugsflüssigkeiten 1 und 2 verglichen. Bei 25°C sind die Werte nahezu gleich, bei 85°C sind jedoch die Flüssigkeiten nach der Erfindung deutlich besser.

Auch die Durchschlagspannung ist hoch genug für den Gebrauch in Hochspannungs-Elektrolytkondensatoren ($\leq$450 V) und in Niederspannungs-Elektrolytkondensatoren ($\leq$150 V).

Tafel 3

| Elektrolytflüssigkeit Nr. | Formierungsausbeute (%) | | Durchschlagspannung (V) bei 85 °C |
|---|---|---|---|
| | 25°C | 85°C | |
| 1 | 83 | 64 | 460 |
| 6 | 81 | 83 | 470 |
| 2 | 89 | 69 | 85 |
| 9 | 100 | 92 | 180 |

Tafel 4 zeigt den Einfluss des Zusatzes von Borsäure und von Borsäure und Butylphosphat auf die Durchschlagspannung bei 85°C bei dem Elektrolyt 5.

Tafel 4

| Zusatz | Gew.% | Durchschlagspannung bei 85°C |
|---|---|---|
| kein | – | 160 |
| Borsäure | 0,7 | 350 |
| Borsäure Butylphosphat | } 0,7 0,5 | 410 |

Der spezifische Widerstand eines Elektrolyten nach der Erfindung (3) und einer Bezugsflüssigkeit (1) wird in der Tafel 5 bei unterschiedlichen Temperaturen angegeben. Ist bei 25°C der spezifische Widerstand von 3) um einen Faktor 2,3 niedriger als der von 1), so ist bei −55°C der spezifische Widerstand von 3) um einen Faktor 22 niedriger als der von 1).

Tafel 5

| Elektrolytflüssigkeit Nr. | Spezifischer Widerstand $\varrho$ ($\Omega$cm) bei Temperatur (°C) | | | | | |
|---|---|---|---|---|---|---|
| | 85 | 25 | 20 | −25 | −40 | −55 |
| 1 | 290 | 935 | 1002 | 8410 | 30700 | 187000 |
| 3 | 170 | 413 | 428 | 1540 | 3150 | 8660 |

Die Tafel 6 zeigt die Stabilität zweier Flüssigkeiten nach der Erfindung bei 125°C. Die herkömmlichen Elektrolytflüssigkeiten Nr. 1 und 2 sind bei 125°C nicht stabil, u.a. deshalb, weil Glykol mit Borsäure verestert.

Bei der Elektrolytflüssigkeit nach der Erfindung hat der spezifische Widerstand nach 1000 Stunden nur wenig zugenommen, unbeachtet des Zusatzes von Butylphosphat, und zwar um nur 11 bzw. 2%.

Tafel 6

| Elektrolytflüssigkeit Nr. | Spezifischer Widerstand ($\varrho$ 25°C) in $\Omega$cm nach x Stunden bei 125°C | | | | |
|---|---|---|---|---|---|
| | 0 St. | 100 St. | 250 St. | 500 St. | 1000 St. |
| 3 | 413 | 441 | 452 | 433 | 457 |
| 4 | 426 | 413 | 402 | 405 | 435 |

Tafel 7 zeigt die Stabilität einer Reihe von Elektrolytkondensatoren mit Flüssigkeiten nach der Erfindung nach 100 Stunden Erprobung bei 85°C und 105°C ohne Spannung im Vergleich zu denen mit herkömmlichen Flüssigkeiten in % gegenüber dem Ausgangswert. Die ersten drei Werte gelten für einen Hochspannungskondensator, die letzten zwei für einen Niederspannungskondensator.

Tafel 7

| Elektrolytflüssigkeit Nr. | $\Delta Z_{100kHz}$ nach 100 St. bei 85°C und 0 V in % | $\Delta Z_{100kHz}$ nach 100 St. bei 105°C und 0 V in % |
|---|---|---|
| 1 | −40,2 | −66,3 |
| 3 | − 5,6 | |
| 6 | −22,3 | −24,3 |
| 2 | −13,0 | −14,8 |
| 9 | − 7,0 | − 7,4 |

Zum Schluss wurde eine Anzahl Elektrolytflüssigkeiten (siehe Tafel 2) in elektrolytischen Kondensatoren auf Lebensdauer geprüft. Diese Kondensatoren bestehen aus einer Anodenfolie aus Aluminium und einer Kathodenfolie, die beide mit einer Kontaktzunge versehen sind und zusammen mit einem Separator aus porösem Papier zu einem Wickel aufgebaut sind. Die Anodenfolie wurde gebeizt und danach durch anodische Oxidation bei einer Spannung formiert, die mindestens 20% über der Betriebsspannung lag. Die Kathodenfolie ist nur gebeizt, so dass die Kathodenkapazität viel höher ist als die Kapazität der formierten Anodenfolie. Der erhaltene Winkel wird mit einer Elektrolytflüssigkeit imprägniert und in einer Hülle untergebracht.

Der Kondensator wird nachformiert.

In den Hochspannungselektrolytkondensatoren nach diesem Beispiel wird bis 550 V formierte Anodenfolie benutzt. Die Kondensatoren haben einen Durchmesser von 15 mm und eine Länge von 30 mm. Sie sind bei 385 V und bei 85°C nachformiert.

In der Tafel 8 sind die Ergebnisse von Lebensdauerprüfungen angegeben und zwar in Form einer Anzahl physikalischer Grössen bei der Stunde 0 und nach 1000 Stunden bei 85°C und bei 385 V, bzw. 500 Stunden bei 105°C und bei 385 V. Die Werte der physikalischen Grössen sind Mittelwerte, gemessen an 10 Kondensatoren. Es wurden gemessen: Die Kapazität (C) bei 100 Hz, der äquivalente Reihenwiderstand (esr) bei 100 Hz, die Impedanz (Z) bei 100 kHz und der Leckstrom (LC) nach 1 Minute, gemessen bei der Betriebsspannung von 385 V und bei 25°C.

Tafel 8

| Elektrolytflüssigkeit Nr. | Stunde 0 | | | | Lebensdauer bei T °C, 385 V | | | | |
|---|---|---|---|---|---|---|---|---|---|
| | C $\mu$F | esr m$\Omega$ | Z m$\Omega$ | LC $\mu$A | $\Delta$C % | $\Delta$sr % | $\Delta$Z $\mu$A | LC °C | T |
| 1 | 20,4 | 2916 | 1350 | 71 | 1,3 | −52 | −72 | 5 | 85 |
| | | | | 55 | | −61 | −80 | 12 | 105 |
| 6 | 20,3 | 1973 | 740 | 120 | 1,3 | − 5,1 | −24,5 | 5 | 85 |
| | | | | 76 | 1,0 | −14,4 | 32,0 | 15 | 105 |
| 7 | 20,1 | 1837 | 642 | 30 | 1,3 | − 9,3 | −28,7 | 3 | 85 |
| 8 | 20,2 | 2701 | 1017 | 238 | 0,8 | −19,8 | −24,6 | 4 | 85 |

Die Flüssigkeiten 6 und 7 nach der Erfindung haben einen wesentlich niedrigeren Wert und Verlauf des esr und der Impedanz als die herkömmlichen Flüssigkeit 1. Die Flüssigkeit 8 kann auch bei 400 V und 85°C benutzt werden.

In Niederspannungs-Elektrolytkondensatoren wird bis 120 V formierte Folie benutzt. Die Kondensatoren haben ebenfalls einen Durchmesser von 15 mm und eine Länge von 30 mm. Sie sind bei 100 V und 85°C nachformiert.

In der Tafel 9 sind die Ergebnisse der Lebensdauerprüfungen in Form der oben bereits angegebenen physikalischen Grössen bei der Stunde 0 und nach 1000 Stunden bei 85°C und bei 100 V und bei 125°C bei 63 V angegeben. Auch hier sind die angegebenen Werte Mittelwerte, gemessen an 10 Kondensatoren. Die Betriebsspannung für die Leckstrommessung ist in diesem Fall 100 V bzw. 63 V.

Tafel 9

| Elektrolytflüssigkeit Nr. | Stunde 0 | | | | Lebensdauer bei T °C und $V_b$ | | | | | |
| | C $\mu$F | esr m$\Omega$ | Z m$\Omega$ | LC $\mu$A | $\Delta$C % | $\Delta$esr % | $\Delta$Z % | LC $\mu$A | T °C | $V_b$ V |
| --- | --- | --- | --- | --- | --- | --- | --- | --- | --- | --- |
| 9 | 283 | 206 | 70,8 | 200 | −1,7 | 9,2 | −2,6 | 19 | 85 | 100 |
| 10 | 302 | 193 | 104 | 141 | −2,7 | 16,7 | −0,2 | 22 | 85 | 100 |
| 9 | 283 | 206 | 70,8 | 25 | −3,6 | 18,0 | 23,1 | 7 | 125 | 63 |

Diese Elektrolytflüssigkeiten nach der Erfindung lassen sich mit der herkömmlichen Flüssigkeit (Nr. 2) nicht vergleichen, da diese bei 85°C, 100 V und 125°C, 63 V ungeeignet ist.

Bei einer weiteren Ausgestaltung der Erfindung ist die Wahl des Papiers, aus dem der Separator hergestellt ist, für die Grösse des Effektes, namentlich in bezug auf die Impedanz Z, die durch die Kondensationsflüssigkeit nach der Erfindung erreicht wird, von Bedeutung. Im Handel sind insbesondere zum Gebrauch als Separatoren für Elektrolytkondensatoren Manila-Papier, hergestellt aus Manila-Fasern, und Zellulosepapier, hergestellt aus Zellulosefasern, erhältlich. Diese Papiersorten, die sich u.a. durch eine unterschiedliche Porosität unterscheiden, sind beispielsweise bei der Firma Schoeller und Hoesch und bei der Firma Bolleré erhältlich.

In der folgenden Tafel 10 werden von jeder der zwei Papiersorten zwei Qualitäten in Kombination mit einigen Flüssigkeiten für den Niederspannungs- und Hochspannungsgebrauch miteinander verglichen. Eine Basis für einen Vergleich ist das Produkt aus Widerstandsfaktor × Papierstärke. Dieses Produkt ist für:

| | |
| --- | --- |
| Manilapapier I | 1200 |
| Manilapapier II | 320 |
| Zellulosepapier I | 240 |
| Zellulosepapier II | 320 |

Tafel 10

| Elektrolytflüssigkeit Nr. | C 25° ($\Omega$cm) | I Manilapapier II | | I Zellulosepapier II | | Formierungsspannung |
| | | Z (m$\Omega$) | Z (m$\Omega$) | Z (m$\Omega$) | Z (m$\Omega$) | der Folie (V) |
| --- | --- | --- | --- | --- | --- | --- |
| 1 | 910 | 1179 | 418 | 322 | 692 | 120 |
| 1 | 935 | 1350 | – | – | – | 550 |
| 7 | 895 | 546 | 264 | 329 | 557 | 120 |
| 7 | 950 | 642 | – | – | – | 550 |
| 2 | 250 | – | – | 86 | – | 120 |
| 9 | 145 | – | – | 71 | – | 120 |
| 9 | 145 | 97 | 54 | 69 | 109 | 120 |

Aus dieser Tafel geht hervor, dass mit einem aus Manilapapier bestehenden Separator die Verbesserung durch die Wahl einer Flüssigkeit nach der Erfindung am deutlichsten ist.

**Patentansprüche**

1. Elektrolytkondensator mit einer durch anodische Oxidation mit einer dielektrischen Oxidschicht versehenen Anode, einer Kathode, einem Separator und einer Elektrolytflüssigkeit aus einem Salz eines zweiwertigen organischen Karbonsäure und einer stickstoffhaltigen organischen Base, gelöst in einer wasserhältigen dipolaren organischen Lösungsmittel, dadurch gekennzeichnet, dass in der Elektrolytflüssigkeit, die mindestens 2, jedoch höchstens 10 Gew.% Wasser enthält, ein Salz einer quaternären Ammoniumbase und einer zweiwertigen organischen Karbonsäure der allgemeinen Formel HOOC-$(CH_2)_n$-COOH, in der $4 \leqslant n \leqslant 8$ ist, gelöst ist.

2. Kondensator nach Anspruch 1 oder 2, dadurch gekennzeichnet, dass das gelöste Salz in der Elektrolytflüssigkeit die Base und die Säure im stoechiometrischen Mol-Verhältnis von 2:1 enthält.

3. Kondensator nach Anspruch 1, 2 oder 3, dadurch gekennzeichnet, dass die Elektrolytflüssigkeit mindestens 2, jedoch höchstens 4 Gew.% Wasser enthält.

4. Kondensator nach Anspruch 1, 2 oder 3, dadurch gekennzeichnet, dass die Elektrolytflüssigkeit Borsäure enthält.

5. Kondensator nach Anspruch 1, 2 oder 3, dadurch gekennzeichnet, dass die Elektrolytflüssigkeit ein gelöstes Phosphat enthält.

6. Kondensator nach einem der vorstehenden Ansprüche, dadurch gekennzeichnet, dass der Separator aus Manila-Papier besteht.

7. Kondensator nach einem der vorstehenden Ansprüche, dadurch gekennzeichnet, dass das Lösungsmittel für die Elektrolytflüssigkeit aus einem Gemisch aus N-Dimethylacetamid und N-Monomethylacetamid in einem Mol-Verhältnis von 4:1 besteht.

### Claims

1. An electrolytic capacitor comprising an anode provided with a dielectric oxide layer by anodic oxidation, a cathode, a spacer and a liquid electrolyte comprising a salt of a bivalent organic carboxylic acid and a nitrogen-containing base dissolved an aqueous dipolar organic solvent, characterized in that a salt of a quaternary ammonium base and a bivalent organic carboxylic acid of the general formula $HOOC-(HC_2)_n-COOH$ in which $4 < n < 8$, is dissolved in the liquid electrolyte which contains at least 2 but at most 10% by weight of water.

2. A capacitor as claimed in Claim 1, characterized in that the dissolved salt in the liquid electrolyte comprises the base and the acid in the stoichiometric mol. ratio 2:1.

3. A capacitor as claimed in Claim 1 or 2, characterized in that the liquid electrolyte comprises at least 2, but at most 4% by weight of water.

4. A capacitor as claimed in Claim 1, 2 or 3, characterized in that the liquid electrolyte comprises boric acid.

5. A capacitor as claimed in Claim 1, 2 or 3, characterized in that the liquid electrolyte comprises a dissolved phosphate.

6. A capacitor as claimed in any of the preceding Claims, characterized in that the spacer consists of Manilla paper.

7. A capacitor as claimed in any of the preceding Claims, characterized in that the solvent in the liquid electrolyte consists of a mixture of N-dimethyl-acetamide and N-monomethylacetamide in a mol. ratio of 4:1.

### Revendications

1. Condensateur électrolytique présentant une anode munie par oxydation anodique d'une couche d'oxyde diélectrique, d'une cathode, d'un séparateur et d'un liquide électrolytique constitué par un sel d'un acide carboxylique organique bivalent et d'une base organique contenant de l'azote dissous dans un solvant organique dipolaire hydratique, caractérisé en ce que dans le liquide électrolytique, qui contient au moins 2 mais au maximum 10% en poids d'eau, est dissous un sel d'une base d'ammonium quaternaire et un acide carboxylique organique bivalent répondant à la formule générale $HOOC-(HC_2)_n-COOH$ dans laquelle $4 \leqslant n \leqslant 8$.

2. Condensateur selon la revendication 1, caractérisé en ce que le sel dissous dans l'électrolyte contient la base et l'acide dans le rapport molaire stoechiométrique de 2:1.

3. Condensateur selon la revendication 1 ou 2, caractérisé en ce que l'électrolyte contient au moins 2, mais au maximum 4% en poids d'eau.

4. Condensateur selon la revendication 1, 2 ou 3, caractérisé en ce que l'électrolyte contient de l'acide borique.

5. Condensateur selon la revendication 1,2 ou 3, caractérisé en ce que l'électrolyte contient un phosphate dissous.

6. Condensateur selon l'une des revendications précédentes, caractérisé en ce que le séparateur est constitué par du papier manille.

7. Condensateur selon l'une des revendications précédentes, caractérisé en ce que le solvant pour l'électrolyte est constitué par un mélange de N-diméthylacétamide et de N-monométhylacétamide dans un rapport molaire de 4:1.